# EUROPEAN PATENT SPECIFICATION

(11) **EP 4 339 602 B1**
(45) Date of publication and mention of the grant of the patent: **16.10.2024**
(21) Application number: 22306351.2
(22) Date of filing: 14.09.2022
(51) Int. Cl.: G01N 23/201

(54) **METHOD OF PERFORMING MACHINE LEARNING OF A SMALL ANGLE X-RAY SCATTERING MEASUREMENT DATA ANALYSIS MODEL**
VERFAHREN ZUR DURCHFÜHRUNG VON MASCHINELLEM LERNEN EINES KLEINWINKEL-RÖNTGENSTREUUNGSMESSDATENANALYSEMODELLS
PROCÉDÉ DE RÉALISATION D'APPRENTISSAGE AUTOMATIQUE D'UN MODÈLE D'ANALYSE DE DONNÉES DE MESURE DE DIFFUSION DE RAYONS X À PETIT ANGLE

(43) Date of publication of application: 20.03.2024
(73) Proprietor: Xenocs SAS, 38000 Grenoble (FR)
(72) Inventor: Høghøj, Peter, 38000 Grenoble (FR); Coué, Christophe, 38000 Grenoble (FR); Cavallari, Chiara, 38000 Grenoble (FR); Monge, Nicolas, 38000 Grenoble (FR)
(74) Representative: Regimbeau

(56) References cited:
- WO-A1-2021/257457
- CN-A- 112 037 181
- US-A1- 2019 049 602
- GUTMAN BENJAMIN ET AL: "Angular super-resolution retrieval in small-angle X-ray scattering", SCIENTIFIC REPORTS, vol. 10, no. 1, 29 August 2020 (2020-08-29), XP093018452, Retrieved from the Internet <URL:https://www.nature.com/articles/s41598-020-73030-2.pdf> [retrieved on 20230127], DOI: 10.1038/s41598-020-73030-2
- GUTMAN BENJAMIN ET AL: "Angular super-resolution retrieval in small-angle X-ray scattering", SCIENTIFIC REPORTS, vol. 10, no. 1, 29 August 2020 (2020-08-29), XP093018452, Retrieved from the Internet <URL:https://www.nature.com/articles/s41598-020-73030-2.pdf> DOI: 10.1038/s41598-020-73030-2

## Description

### TECHNICAL FIELD

The field of the invention is that of material nanostructure analysis using Small Angle X-ray Scattering (SAXS). The invention more particularly relates to the training and inference of a machine learning based SAXS measurement data analysis model.

### DESCRIPTION OF RELATED ART

Small-angle X-ray scattering (SAXS) is a powerful analytical technique to study the structure of bulk disordered samples such as nanoparticles and colloids, nanocomposites, polymers in solution, biomaterials.

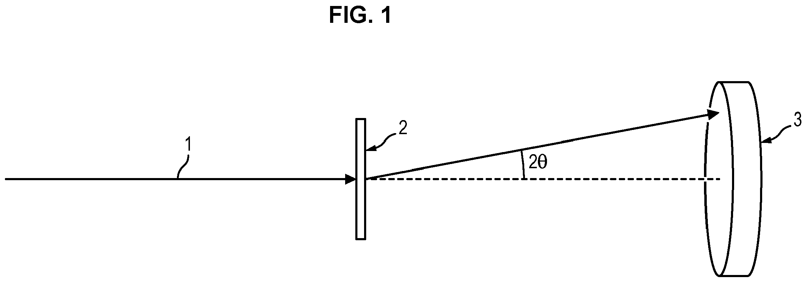

SAXS measures the intensities of X-rays scattered by a sample as a function of the scattering angle. Figure 1 shows how SAXS works. In a typical experiment, a highly collimated beam of monochromatic x-rays 1 is transmitted through a sample 2 on the order of 1 mm in thickness. The scattered x-rays are collected on a 2-dimensional area detector 3, with an azimuthal intensity distribution of scattering angles which deviate from the direct, transmitted beam. The scattering angle, which is defined by convention as 2θ, defines a "probe length" expressed as D =2π/q, where q = 4πsin(θ)/λ, in which λ is the wavelength of the x-rays (typically 0.154 nm for a Cu x-ray source). Measurements are made at very small angles, typically in the range of 0.1 degrees to 10 degrees, and sample parameters can be determined from the analysis of the sample scattered intensity profile as a function of angle.

Material scientists are used to treat SAXS measurement data by fitting to the experimental scattering curve a theoretical scattering model associated to a nanostructure in a medium (the last being a solvent solution in case of a dispersion or in the case of a powder it could be air). The difficulty of SAXS analysis lies in the fact that a large range of scattering models have been developed to describe various form factors (associated to the shape of the particle) or combination of form factors, potentially combined with structure factors to describe sample interaction. Moreover, different models (and/or associated structural parameters) can fit experimental data equally well. The number of possible models and the fact that SAXS data are low featured curves renders the selection of an appropriate model complicated for the user.

In this context, Machine Learning (ML) methods have recently been used to assist users in the selection of the best model for analyzing SAXS data. For instance, a trained ML classification algorithm can automatically provide probabilities of compatibility of experimental SAXS measurement data with each model from a large set of theorical scattering models. In CN 112 037 181, 2D SAXS spectra are obtained to derive a deep learning algorithm. In WO 2021/257457 and US 2019/049601, machine learning is used in SAXS measurement analysis.

### BRIEF DESCRIPTION OF THE INVENTION

An objective of the invention is to provide a SAXS analysis assistance ML method of improved accuracy. To this purpose, the invention relates to a a computer-implemented method of generating a training dataset and of using the training dataset for performing machine learning of a first Small Angle X-ray Scattering, SAXS, measurement data analysis model associated to a first set of SAXS measurement experimental settings which includes a first X-ray beam intensity profile at a 2D detector. Generating the training dataset comprises the step of:
- calculating SAXS intensity profiles each corresponding to varying parameters of at least one structural model of a sample in a medium; and
- based on the first set of SAXS measurement experimental settings, estimating a first experimental SAXS intensity profile from each one of the calculated SAXS intensity profi les.
More particularly, said estimating comprises smearing each one of the calculated SAXS intensity profiles through convolution with a point-spread function associated with the first X-ray beam intensity profile.

Certain preferred, but non-limiting aspects of this method are as follows :
- the first set of SAXS measurement experimental settings further comprises signal to noise settings which include a size of the 2D detector and a beam position on the 2D detector and said estimating further comprises adding noise to each one of the calculated SAXS intensity profiles based on the signal to noise settings;
- it further comprises determining, based on the first set of SAXS measurement experimental settings and on a theoretical SAXS intensity profile of a blank solution, an experimental SAXS intensity profile of the blank solution and subtracting the experimental SAXS intensity profile of the blank solution from each one of the experimental SAXS intensity profiles;
- calculating SAXS intensity profiles corresponding to varying parameters of at least one structural model of a sample in a medium is performed for a plurality of structural models and the first SAXS measurement data analysis model is a structural model classifier trained to predict compatibility of experimental SAXS measurement data with each structural model of the plurality of structural models;
- calculating SAXS intensity profiles corresponding to varying parameters of at least one structural model of a sample in a medium is performed for a single structural model and the first SAXS measurement data analysis model is a regression model trained to predict a value of at least one of the varying parameters based on experimental SAXS measurement data;
- generating the training dataset further comprises the steps of normalizing, transforming to a logarithmic scale and standardizing the determined experimental SAXS intensity profiles;
- the first set of SAXS measurement experimental settings further includes a detector pixel size and a sample to detector distance;
- the first set of SAXS measurement experimental settings further includes a measuring time;
- it further comprising determining a second experimental SAXS intensity profile for each one of the calculated SAXS intensity profiles based on a second set of SAXS measurement experimental settings which includes a second X-ray beam intensity profile at the 2D detector and the first experimental SAXS intensity profiles are used for performing machine learning of the first SAXS measurement data analysis model and the second experimental SAXS intensity profiles are used for performing machine learning of a second SAXS measurement data analysis model associated to the second set of SAXS measurement experimental set-up settings.

The invention also relates to a method of SAXS measurement data analysis, comprising the steps of:
- obtaining SAXS data corresponding to experimental measurement made by a SAXS instrument; and
- processing the obtained SAXS data using the first SAXS measurement data analysis model learnt in accordance with the invention.

The invention also relates to a method of SAXS measurement data analysis, comprising the steps of:
- obtaining SAXS data corresponding to experimental measurement made by a SAXS instrument;
- processing the obtained SAXS data using a structural model classifier trained in accordance with the invention;
- selecting the structural model having the highest compatibility with the experimental SAXS measurement data; and
- processing the obtained SAXS data using a regression model trained in accordance with the invention with the selected structural model as the single structural model, to determine a value of at least one of the varying parameters.

It may further comprise determining parameters of a sample model by fitting the obtained SAXS data to the sample model, said determining being initiated based on the determined value and the selected structural model.

The invention also relates to a method of SAXS measurement data analysis, comprising the steps of:
- obtaining SAXS data corresponding to experimental measurement made by a SAXS instrument having given experimental settings;
- based on the given experimental settings, selecting a first or a second SAXS measurement data analysis model learnt in accordance with the invention; and
- processing the obtained SAXS data with the selected one of the first or second SAXS measurement data analysis.
- The invention also relates to a method of SAXS measurement data analysis, comprising the steps of:
   - obtaining SAXS data corresponding to experimental measurement made by a SAXS instrument having experimental settings;
   - performing machine learning in accordance with the invention of first SAXS measurement data analysis model using the experimental settings; and
   - processing the obtained SAXS data with the learnt first SAXS measurement data analysis model.

### BRIEF DESCRIPTION OF THE DRAWINGS

Other aspects, aims, advantages and features of the invention will better appear upon reading the following detailed description of preferred embodiments thereof, provided as a non-limiting example, and done in reference to the appended drawings, in which:
- Figure 1, already discussed above, is a diagram illustrating the principles of SAXS measurement;
- Figure 2 is a diagram illustrating a possible embodiment of a method according to the invention of generating a training dataset and of using the training dataset for performing machine learning of a SAXS measurement data analysis model; invention;
- Figure 3 is a diagram illustrating a possible use of SAXS measurement data analysis models trained in accordance with the invention;
- Figure 4 is a diagram illustrating a possible live training in accordance with the invention of a SAXS measurement data analysis model;
- Figure 5 shows a theoretical SAXS intensity profile and a corresponding experimental SAXS intensity profile estimated in accordance with the invention.

### DETAILED DESCRIPTION OF THE INVENTION

The invention relates to a computer-implemented method of generating a training dataset and of using the training dataset for performing machine learning of a SAXS measurement data analysis model associated to a set of SAXS measurement experimental settings.

In an embodiment, the SAXS measurement data analysis model is a classification model which is trained to predict compatibility of experimental SAXS measurement data with each structural model of a plurality of structural models.

In another embodiment, the SAXS measurement data analysis model is a regression model which is trained to predict a value of at least one parameter of a structural model based on experimental SAXS measurement data.

A structural model is an analytical form factor describing a scattering sample (the scatterer) in a medium or buffer (typically a solvent in case of a dispersion, or air in case of a powder) with varying parameters. The varying parameters can include variable geometric parameters describing a structural object size (and possibly the associated polydispersity). The varying parameters can also include electronics parameters. As it is known from the prior art, the structural model could be a product of a form factor and a structure factor where the structure factor describes the interactions between the scatters.

As an example, six structural models may be considered each associated to one of the following form factors: sphere, cylinder, ellipsoid, core shell sphere, core shell cylinder and core shell ellipsoid. The geometric parameters may include a radius, a length, a shell thickness depending on the object and a polydispersity. The electronics parameters may include a scattering length density of the sample in solution (obtained as a difference in scattering length density between the scatterer and the buffer), a scattering length density of the core and a scattering length density of the shell in case of a core-shell for example. The scattering length densities define the scattering power of the sample and can be estimated based on sample and buffer composition and mass density.

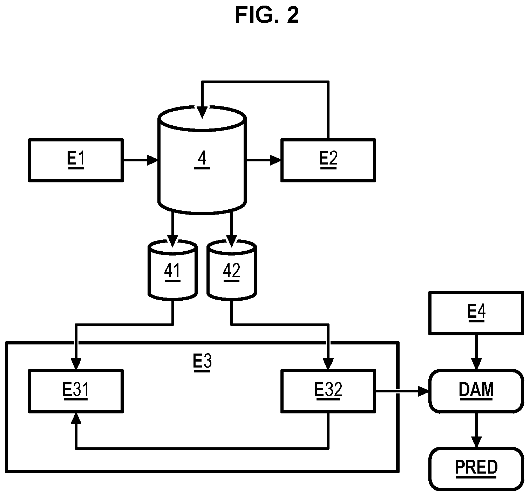

With reference to figure 2, in order to generate the training dataset, the method according to the invention comprises a step E1 of calculating SAXS intensity profiles each corresponding to varying parameters of at least one structural model of a sample in a medium. When training a classification model, this step is performed with a plurality of structural models. When training a regression model, this step is typically performed with a single structural model. The calculated SAXS intensity profiles may be stored in a database 4.

Each calculated SAXS intensity profile is a theoretical 1D scattering curve associated to a form factor and related geometric and electronics parameters. The calculated SAXS intensity profiles each corresponding to varying parameters of a same structural model therefore form a set of theoretical 1D scattering curves associated to the same form factor but with different values for the related geometric and electronics parameters. When calculating such theoretical 1D scattering curves associated to a same form factor, at least one of the related geometric and electronics parameters may be subject to random sampling.

In an example embodiment, 10000 curves I(q) are calculated per form factor, making a total of 60000 simulated curves. Curves are simulated on a q range defined by a lower boundary qmin, an upper boundary qmax and a number of q-points. As an example, in the case of core-shell cylinder, for each simulated curve radius values can vary randomly between 50 and 1000 Å, length values can vary randomly between 1- 30 times the radius, shell thickness can vary between 50 and 1000 Å and size polydispersity (expressed as a percentage of the full width at half maximum of a Gaussian function centered around the mean value) can vary randomly between 0% and 30%. The electronics parameters may be fixed parameter, such as a scattering length density of the solution, of the core and of the shell being respectively of 9.10⁻⁶ Å⁻², 121.10⁻⁶ Å⁻² and 18.10⁻⁶ Å⁻².

Still with reference to figure 2, the method according to the invention further comprises a step E2 of estimating, based on the set of SAXS measurement experimental settings, an experimental SAXS intensity profile from each one of the calculated SAXS intensity profiles. This step E2 estimates 1D experimental curves that would be obtained using a SAXS laboratory instrument having the settings of the set of SAXS measurement experimental settings. In other words, it simulates the impact that those settings have on the SAXS measurement by transforming the 1D theorical curves into 1D experimental curves. As discussed below, this transformation may model impact of given sample properties, of instrument resolution parameters and of instrument signal to noise parameters.

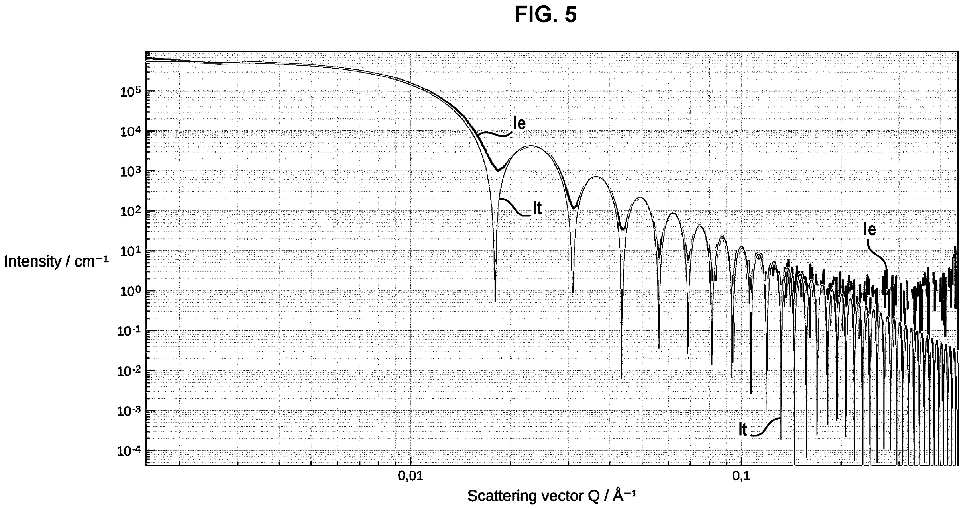

According to the invention, the set of SAXS measurement experimental settings comprises instrument resolution settings which include a X-ray beam intensity profile at the 2D detector and estimating an experimental SAXS intensity profile from each one of the calculated SAXS intensity profiles comprises smearing each one of the calculated SAXS intensity profiles through convolution with a point-spread function associated with the first X-ray beam intensity profile. In this respect, figure 5 shows a calculated SAXS intensity profile It and its corresponding experimental intensity profile le as smeared in accordance with the invention.

In an embodiment, the beam size and profile are given values based on calculation taking into account divergence of direct beam and size of the collimation slits. In another embodiment, use is made of the real direct beam size profile.

The point-spread function may be defined by a smearing parameter which describes the beam size profile at the detector. This parameter may be a FWHM (Full Width at Half Maximum) of the intensity beam profile at the detector estimated from the measuring configuration (estimation from optical design of the X-ray scattering beamline) or obtained by experimental characterization of the beam profile at the detector and gaussian fit to determine this smearing parameter (for example the FWHM). An experimental SAXS intensity profile is then obtained by applying a convolution kernel of finite size (FWHM) to the theoretical intensity profile as obtained by the step E1.

In a preferred embodiment of the invention, the complete 1D intensity beam profile at the detector, for instance with more than 9 orders of magnitude in Q, is used to convolute the theoretical intensity profile. Indeed, being that the beam is not perfectly gaussian, its approximation with a gaussian function might lead to worsen the accuracy of the model. As the direct beam profile can be determined experimentally, it can be used directly for beam smearing. This has proven to improve the accuracy on real data.

The instrument resolution settings may also include a detector pixel size and/or a sample to detector distance.

The set of SAXS measurement experimental settings may also comprise sample properties settings characterizing the scattering power of the sample for instance selected from the chemical composition of the sample or its scattering length density, the chemical composition of the buffer solution or its scattering length density, the sample thickness and the volume fraction of the sample against the solution.

The set of SAXS measurement experimental settings may also include measuring condition settings such as the measuring time.

The set of SAXS measurement experimental settings may also comprise signal to noise settings for instance selected from the beam intensity, the detector area and the beam position on detector. In such case, estimating the experimental curves from the theorical ones may further comprise adding noise to each one of the calculated SAXS intensity profiles based on the signal to noise settings. For instance, Poisson statistics can be added to take into account the realistic data in terms of signal to noise.

Unlike other methods used to train an AI (Artificial Intelligence) model applied to SAXS, the invention here simulates the scattering data with realistic statistics, for a given model (form factor) and a given set of experimental settings, taking in particular into account the impact of the beam profile at the detector on data smearing. While this could have a limited impact for synchrotron applications, the Applicant has found that this is particularly impacting for laboratory SAXS applications.

Moreover, the impact of the geometry of measurement and detection on the signal to noise can also be taken into account. Some models only apply a simple Poisson statistics based on the sample scattering power (intrinsic property due to the material electronic contrast with regards to its buffer or air in case of powder), beam intensity and measuring time. Here, the measurement and detection scheme can also be taken into account, in addition to the beam intensity and measuring time and sample scattering properties. For example, the surface of detection of the detector impacts the number of pixels which collect the signal and which are used for the azimuthal averaging of the 2D data pattern into a 1D scattering curve. This therefore impacts the signal to noise of the 1D scattering curve in particular close to the edge of the 1D scattering curve (Qmax).

In a preferred embodiment, step E2 can also comprise simulating the scattering profile of the buffer (which is for instance the solution in which the material to be characterized, for instance nanoparticles, is dispersed). Such estimation is based taking into account the experimental configuration (i.e., the set of experimental settings), for instance both in terms of signal to noise and resolution.

In this embodiment, the method comprises estimating, based on the first set of SAXS measurement experimental settings and on a theoretical SAXS intensity profile of a blank solution (i.e., the buffer without the material to be characterized), an experimental SAXS intensity profile of the blank solution. Then, the experimental SAXS intensity profile of the blank solution is subtracted from each one of the estimated experimental curves (intensity profiles of the sample dispersed in the solution).

In a possible embodiment, simulating the impact of the experimental settings takes as input the form-factor model describing the sample (i.e., the ideal, theoretical intensity) and the buffer respectively. On output it predicts the expected measured intensity and signal to noise ratio at each and every q-value available in the experiment. The number of photons scattered by the sample and collected by each pixel of the detector are estimated for both (a) the sample in the buffer and (b) the buffer only. A pixel independent noise based on the signal to noise settings can be added to each pixel in (a) and (b) scenarii, for instance based on a Poisson distribution. The 2D data matrices (pixel values at the detector) are reduced to 1D vectors by averaging the equivalent azimuths and full consideration of geometric distortion effects. The result can be normalized with respect to the number of photons scattered in (a) and (b) respectively. A sample-only signal can then be obtained by subtracting the previously obtained 1D vectors.

The estimated experimental SAXS intensity profiles form a training dataset. This training dataset can be split into a learning dataset 41 (with for instance 80% of the experimental profiles) and a testing dataset 42 (with for instance 20% of the experimental profiles). The method then comprises a step E3 of using the training dataset to perform machine learning of the SAXS measurement data analysis model DAM. This step E3 is divided into a first step E31 of obtaining the model using an AI algorithm and the learning dataset 41 and a second step E32 of evaluating the obtained model using the testing dataset 42 for testing the accuracy of its predictions.

In step E31, the experimental profiles may be preprocessed before passing to the AI algorithm. This preprocessing may comprise normalizing, transforming to a logarithmic scale and standardizing the experimental profiles.

Normalizing may comprise performing a normalization to the I at the first q-point or a normalization to the invariant - the curve is divided by its area times q to the power of 2.

Transforming to a logarithmic scale may comprise applying to the negative points a threshold set at 10⁻¹² or at random value comprised between 10⁻⁶ and 10⁻¹⁵.

Standardizing may be performed using a standard scaler whereby the mean of the experimental profiles at a given q-value is subtracted to an experimental profile and the result of this subtraction is divided by the standard deviation of the experimental profiles at the given q-value.

When the model to be trained is a regression model for prediction of particle size (for instance its radius when the from factor is the one of a sphere) and polydispersity, the training features are all I(q) values for each of the q points associated to each experimental profile while the targets are two scalars: size and polydispersity. Several AI regression algorithms for prediction of size and polydispersity can be considered. However, best performances on the testing dataset were registered using a classical Machine Learning random forest and a 1D convolutional neural network. Once trained, the model takes as input an I(q) curve only, needed preprocessing is applied and predictions of the 2 values of size and polydispersity are output. With a regression model trained based on a random forest algorithm, a prediction given by the model can be the mean value of the predictions given by the N estimators (trees) that constitute the forest. The model can also provide a standard deviation parameter associated with the predictions of the N estimators.

Different type of laboratory SAXS instruments can be found on the market. Instruments with rather fixed experimental settings or with a very large variability of the settings are available. In both cases, at least some instrumental and signal to noise configurations are based on settings defined by the user, such as beam size and corresponding intensity. This requires to create different models for a given classifier or different models for a given regression algorithm (such as different analysis modules corresponding to a set of selected experimental parameters for a given algorithm trained for example for size determination of spheres or size determination of ellipsoids). For instance, three models are to be trained corresponding to three different beam size settings and associated intensity. As an example of the typical values of such settings and application, to apply the models to samples with scatterer sizes (or diameter) from about 1nm to 200nm, one could consider building three type of models based on beam size settings and associated intensities corresponding respectively to point spread functions of 0.0018 Å⁻¹, 0.0024 Å⁻¹ and 0.0028 Å⁻¹ and respectively to beam intensities of 1×10⁶ ph/s, 1x 10⁷ ph/s and 6x 10⁷ ph/s.

Hence, the invention may comprise:
- determining a first experimental SAXS intensity profile for each one of the calculated SAXS intensity profiles based on a first set of SAXS measurement experimental settings which includes a first X-ray beam intensity profile at the 2D detector;
- determining a second experimental SAXS intensity profile for each one of the calculated SAXS intensity profiles based on a second set of SAXS measurement experimental settings which includes a second X-ray beam intensity profile at the 2D detector;
- the first experimental SAXS intensity profiles being used for performing machine learning of a first SAXS measurement data analysis model associated to the first set of SAXS measurement experimental set-up settings; and
- the second experimental SAXS intensity profiles being used for performing machine learning of a second SAXS measurement data analysis model associated to the second set of SAXS measurement experimental set-up settings.

Of course, more than two SAXS measurement data analysis models may be learnt according to the preceding procedure.

The first and/or second SAXS measurement data analysis models may be labelled with the associated first or second set of SAXS measurement experimental settings. This labelling may include associating the minimum scattering wavevector from the experimental SAXS intensity profiles.

The invention also relates to the use of the trained SAXS measurement data analysis model(s) to perform SAXS measurement data analysis. With reference to figure 2, such use typically comprises obtaining, at step E4, SAXS data corresponding to an experimental measurement made by a SAXS instrument and processing the obtained SAXS data using a trained SAXS measurement data analysis model DAM to obtain predictions PRED.

In a possible embodiment, several SAXS measurement data analysis models have been trained, each associated to a given set of experimental settings. These SAXS measurement data analysis models may consist in or include the above listed first and second SAXS measurement data analysis models. In such case, the method of SAXS measurement data analysis may comprise the steps of obtaining SAXS data corresponding to experimental measurement made by a SAXS instrument having given experimental settings, of selecting, based on the given experimental settings, one of the trained SAXS measurement data analysis models and of processing the obtained SAXS data with the selected one of the trained SAXS measurement data analysis models.

In a possible embodiment, a test step may be performed to determine boundaries of usage for the set of experimental settings associated to the first or second SAXS measurement data analysis model.

Such boundaries may be determined by assessing the robustness of a model against sample and experimental settings variability, as for instance defined by the errors in prediction, and identifying those settings that lead to an outlier error greater than a threshold.

As an example, sample related and experimental settings may include chemical composition, volume fraction, acquisition time, beam smearing and intensity. Chemical composition, that relates to the scattering power of the measured sample, may be varied from Au in water, SiO2 in water to polystyrene in toluene. Reference training values of 0.005 vol/vol for volume fraction and 30 min exposition time are issued from experimental measurements at known conditions of a diluted solution of SiO2 nanoparticles in water. A testing dataset obtained with variable parameters (i.e. acquisition times from few seconds to 1 or 2 hours and volume fractions 3 or 4 orders of magnitude smaller than the reference ones) is used to assess the robustness of the models against sample variability and experimental conditions. Outliers can for instance be defined by analysing the evolution of the errors in prediction. Increase of the Root Mean Square Error by a factor 2 can be considered as an exclusion condition for the outliers. With such method, a model created with the testing conditions above (0.005 vol/vol, 30 min exposure time) can be used on X-ray scattering data of samples of the same type with a measuring time higher than 10 minutes and a volume fraction higher than 0.0005 vol/vol.

Then, obtaining SAXS data corresponding to an experimental measurement made by a SAXS instrument may be followed by a step of measuring the mimimum wavevector Qminₑₓₚ of the obtained SAXS data, a control step to check the compatibility of the experimental settings with the boundaries of usage of the first or second SAXS measurement data analysis model and a comparison step to check whether the measured Qminₑₓₚ is higher or equal than the simulated Qminₛᵢₘ (i.e. the minimum scattering wavevector as determined from the experimental SAXS intensity profiles). Indeed, it is important for the ML algorithms that the Qminₑₓₚ is the closest possible to the Qminₛᵢₘ used to create the first or second SAXS measurement data analysis model. If the Qminₑₓₚ is higher than the Qminₛᵢₘ used to create one of the first or second SAXS measurement data analysis model, then the corresponding model will not be used for inference of the input SAXS data. This Qminₑₓₚ is typically determined by making a subtraction between the solution sample and buffer background scattering signal to extract the signal from the scatterer. A good criterion for a good Qmin with low errors is to consider when the subtracted scattering is crossing the buffer background scattering signal taking into account scattering intensities in absolute value ("absolute intensities"). Consequently, determining the Qminₑₓₚ can be performed during the experiment using a previous measurement of the buffer or using a data standard reference on the same buffer for the same experimental settings.

Importantly, the control step includes checking whether the beam resolution parameter is compatible with the values used to create the first or second SAXS measurement data analysis model (i.e., it is within the boundaries of usage). Obtaining the beam resolution parameter during the experiment can be performed by extracting this value from a measurement without sample just before the experiment or with the buffer sample. The beam resolution parameter (which could be the FWHM calculated from a Gaussian fit or the complete beam profile) is then compared to the beam resolution parameter used in step E2.

In a possible embodiment, selecting the proper SAXS measurement data analysis model (i.e. the one trained with the proper experimental settings) may be automatically performed using a pre-selection tool configured to extract the experimental settings from a configuration file updated during the measurement process or from a data header filled at the end of the measurement process. The pre-selection tool may also be configured to collect experimental settings from from data entered by user (such as chemical formula and concentration).

As discussed above, in the case where a large number of experimental settings can be user-defined and over a large range of values, this implies creation of a large number of analysis model. The Applicant has found that some instrumental settings have more impact than others for which a variation compared to the exact measuring position could be tolerated. In a possible embodiment of the invention, a tolerance may be applied with regards to certain resolution, signal to noise, or sample characteristics parameters so that the experimental settings used for measurement may diverge from those used to train the model for inference of the measurement. For example, with regards to sample to detector distance and pixel size a tolerance of few percent up to 10 percent can be applied between the experimental setting used for measurement and the setting used for training the model. In that case, a preliminary data treatment may be performed to resample the experimental data in the same Q grid (a well-known binning process, or splitting process can be applied).

In another possible embodiment, the SAXS measurement data analysis model is trained with given sample properties (such as scattering power and concentration) and measuring settings (such as measuring time). The trained model can also be applied to experimental data acquired for a sample having different properties and using different measuring settings.

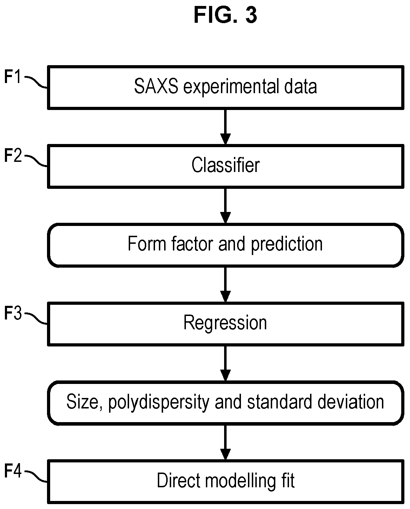

In a possible embodiment shown on figure 3, the invention relates to a method of SAXS measurement data analysis which comprises a step F1 of obtaining SAXS data corresponding to experimental measurement made by a SAXS instrument and a step F2 of processing the obtained SAXS data using a classification model trained in accordance with the invention. Step F2 predicts the compatibility of the obtained SAXS data with each of a plurality of structural models (denoted as Form factor and prediction in figure 3). Then the method comprises a step F3 of processing the obtained SAXS data using a regression model trained in accordance with the invention and associated to the structural model having the highest compatibility with the obtained SAXS data as predicted by the classification model at step F2. Step F3 allows determining, from the obtained SAXS data, a value of at least one of the varying parameters (the unknown structural parameter(s) such as size and polydispersity and their standard deviation in case of a Random Forest regression model). This method may follow with a step F4 of determining parameters of a sample model by fitting the obtained SAXS data to a model, said determining being initiated based on the determined value and the selected structural model.

In another embodiment, for instance where the number of user defined parameters values is too high and in case where the performance of the ML algorithm is too sensitive to such values, training of the ML can be done in real time. For this purpose, a pre preselection tool may be used to extract the real measuring conditions associated to the experimental settings. ML algorithm is then trained by creating training and testing data set associated to the experimental settings. According to this embodiment, SAXS measurement data analysis comprises the steps of:
- obtaining SAXS data corresponding to experimental measurement made by a SAXS instrument having experimental settings;
- implementing machine learning of the first SAXS measurement data analysis model using the experimental settings as the settings of the first set of SAXS measurement experimental settings; and
- processing the obtained SAXS data with the learnt first SAXS measurement data analysis model.

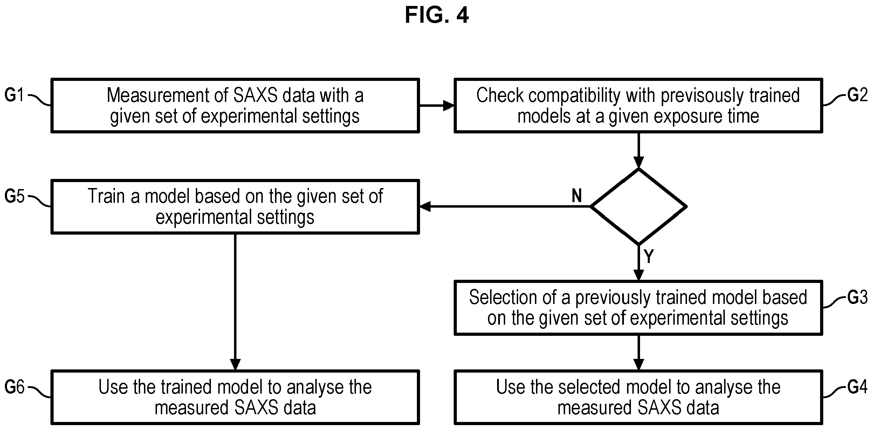

In a further embodiment shown on figure 4, the invention relates to a method of SAXS measurement data analysis which comprises a step G1 of obtaining SAXS data corresponding to an experimental measurement made by a SAXS instrument with a given set of experimental settings. In a step G2, compatibility of this experimental measurement (in terms of sample and experimental setting, i.e., sample scattering power, resolution, sample detector distance, acquisition time) with previously trained models is checked. In case there is such a compatibility, then a step G3 is performed in which one of the previously trained models is selected based upon the given set of experimental settings followed by a step G4 of using the selected model to analyse the measured SAXS data. In case there is no such a compatibility, step G2 is followed by a step G4 of training (real time training a set forth above) a model based on the given set of experimental settings and by a step G6 of using the trained model to analyse the measured SAXS data.

The invention is not limited to the above-described methods but also relates to a computer program product comprising instructions which, when the program is executed by a computer, cause the computer to perform any one of the above-described methods, to a data processing unit comprising a processor configured to perform any one of the above-described methods and to a Small Angle X-ray Scattering instrument comprising such a data processing unit.

## Claims

1. A computer-implemented method of generating (E1, E2) a training dataset (41, 42) and of using (E3, E31, E32) the training dataset for performing machine learning of a first Small Angle X-ray Scattering, SAXS, measurement data analysis model (DAM), wherein generating the training dataset comprises the step of:
- calculating (E1) 1D SAXS intensity profiles each corresponding to varying parameters of at least one structural model of a sample in a medium; and
- based on a first set of SAXS measurement experimental settings which includes a first X-ray beam intensity profile at a 2D detector, estimating (E2) a first experimental 1D SAXS intensity profile from each one of the calculated 1D SAXS intensity profiles,
wherein said estimating comprises smearing each one of the calculated 1D SAXS intensity profiles through convolution with a point-spread function associated with the first X-ray beam intensity profile.

2. The computer-implemented method of claim 1, wherein the first set of SAXS measurement experimental settings further comprises signal to noise settings which include a size of the 2D detector and a beam position on the 2D detector and wherein said estimating further comprises adding noise to each one of the calculated 1D SAXS intensity profiles based on the signal to noise settings.

3. The computer-implemented method according to one of claims 1 and 2, further comprising determining, based on the first set of SAXS measurement experimental settings and on a theoretical 1D SAXS intensity profile of a blank solution, an experimental 1D SAXS intensity profile of the blank solution and subtracting the experimental 1D SAXS intensity profile of the blank solution from each one of the experimental 1D SAXS intensity profiles.

4. The computer-implemented method according to one of claims 1 to 3, wherein calculating 1D SAXS intensity profiles corresponding to varying parameters of at least one structural model of a sample in a medium is performed for a plurality of structural models and wherein the first SAXS measurement data analysis model is a structural model classifier trained to predict compatibility of experimental SAXS measurement data with each structural model of the plurality of structural models.

5. The computer-implemented method according to one of claims 1 to 3, wherein calculating 1D SAXS intensity profiles corresponding to varying parameters of at least one structural model of a sample in a medium is performed for a single structural model and wherein the first SAXS measurement data analysis model is a regression model trained to predict a value of at least one of the varying parameters based on experimental SAXS measurement data.

6. The computer implemented-method according to one of claims 1 to 5, wherein generating the training dataset further comprises the steps of normalizing, transforming to a logarithmic scale and standardizing the determined experimental SAXS intensity profiles.

7. The computer-implemented method according to one of claims 1 to 6, wherein the first set of SAXS measurement experimental settings further includes a detector pixel size and a sample to detector distance.

8. The computer-implemented method according to one of claims 1 to 7, wherein the first set of SAXS measurement experimental settings further includes a measuring time.

9. The computer-implemented method of one of claims 1 to 8, further comprising determining a second 1D experimental SAXS intensity profile for each one of the calculated SAXS intensity profiles based on a second set of SAXS measurement experimental settings which includes a second X-ray beam intensity profile at the 2D detector and wherein the first experimental 1D SAXS intensity profiles are used for performing machine learning of the first SAXS measurement data analysis model and the second experimental 1D SAXS intensity profiles are used for performing machine learning of a second SAXS measurement data analysis model associated to the second set of SAXS measurement experimental set-up settings.

10. A method of SAXS measurement data analysis, comprising the steps of:
- obtaining SAXS data corresponding to experimental measurement made by a SAXS instrument; and
- processing the obtained SAXS data using the first SAXS measurement data analysis model learnt by the method of claim 1.

11. A method of SAXS measurement data analysis, comprising the steps of:
- obtaining (F1) SAXS data corresponding to experimental measurement made by a SAXS instrument;
- processing (F2) the obtained SAXS data using the structural model classifier trained by the method of claim 4;
- selecting the structural model having the highest compatibility with the experimental SAXS measurement data; and
- processing (F3) the obtained SAXS data using the regression model learnt by the method of claim 5 with the selected structural model as the single structural model, to determine a value of at least one of the varying parameters.

12. The computer-implemented method of claim 11, further comprising determining (F4) parameters of a sample model by fitting the obtained SAXS data to the sample model, said determining being initiated based on the determined value and the selected structural model.

13. A method of SAXS measurement data analysis, comprising the steps of:
- obtaining SAXS data corresponding to experimental measurement made by a SAXS instrument having given experimental settings;
- based on the given experimental settings, selecting the first or the second SAXS measurement data analysis model learnt by the method of claim 10; and
- processing the obtained SAXS data with the selected one of the first or second SAXS measurement data analysis.

14. A method of SAXS measurement data analysis, comprising the steps of:
- obtaining (G1) SAXS data corresponding to experimental measurement made by a SAXS instrument having experimental settings;
- implementing (G5) the method of claim 1 to perform machine learning of the first SAXS measurement data analysis model using the experimental settings as the settings of the first set of SAXS measurement experimental settings; and
- processing (G6) the obtained SAXS data with the learnt first SAXS measurement data analysis model.

15. A data processing unit comprising a processor configured to perform the method of any one of claims 1 to 14.

16. A Small Angle X-ray Scattering instrument comprising a data processing unit according to claim 15.

17. A computer program product comprising instructions which, when the program is executed by a computer, cause the computer to perform the method of any one of claims 1 to 14.

## Patentansprüche

1. Computerimplementiertes Verfahren zum Erzeugen (E1, E2) einer Trainingsdatenmenge (41, 42) und zum Verwenden (E3, E31, E32) der Trainingsdatenmenge zum Durchführen von maschinellem Lernen eines ersten Small Angle X-ray Scattering (Kleinwinkel-Röntgenstreuung), SAXS, Messungsdatenanalysemodells (DAM), wobei das Erzeugen der Trainingsdatenmenge den Schritt aufweist zum:
- Berechnen (E1) von 1D-SAXS-Stärkeprofilen, die jeweils variierenden Parametern mindestens eines Strukturmodells einer Probe in einem Medium entsprechen; und
- basierend auf einer ersten Menge von experimentellen SAXS-Messungseinstellungen, die ein erstes Röntgenstrahl-Stärkeprofil an einem 2D-Detektor umfasst, Schätzen (E2) eines ersten experimentellen 1D-SAXS-Stärkeprofils von jedem einzelnen der berechneten 1D-SAXS-Stärkeprofile,
wobei das Schätzen das Verschmieren von jedem einzelnen der berechneten 1D-SAX-Stärkeprofile durch Faltung mit einer Punktspreizfunktion umfasst, die mit dem ersten Röntgenstrahl-Stärkeprofil verknüpft ist.

2. Computerimplementiertes Verfahren nach Anspruch 1, wobei die erste Menge von experimentellen SAXS-Messungseinstellungen ferner Signal-Rausch-Einstellungen umfasst, die eine Größe des 2D-Detektors und eine Strahlposition auf dem 2D-Detektor umfassen, und wobei das Schätzen ferner das Hinzufügen von Rauschen zu jedem einzelnen von den berechneten 1D-SAXS-Stärkeprofilen basierend auf den Signal-Rausch-Einstellungen umfasst.

3. Computerimplementiertes Verfahren nach einem der Ansprüche 1 und 2, ferner umfassend das Bestimmen, basierend auf der ersten Menge von experimentellen SAXS-Messungseinstellungen und auf einem theoretischen 1D-SAXS-Stärkeprofil einer Leerwertlösung, eines experimentellen 1D-SAXS-Stärkeprofils der Leerwertlösung und das Subtrahieren des experimentellen 1D-SAXS-Stärkeprofils der Leerwertlösung von jedem einzelnen der experimentellen 1D-SAXS-Stärkeprofile.

4. Computerimplementiertes Verfahren nach einem der Ansprüche 1 bis 3, wobei das Berechnen von 1D-SAXS-Stärkeprofilen, die variierenden Parametern von mindestens einem Strukturmodell einer Probe in einem Medium entsprechen, für eine Vielzahl von Strukturmodellen durchgeführt wird und wobei das erste SAXS-Messungsdatenanalysemodell ein Strukturmodellklassifikator ist, der zum Vorhersagen der Vereinbarkeit von experimentellen SAXS-Messungsdaten mit jedem Strukturmodell der Vielzahl von Strukturmodellen trainiert wird.

5. Computerimplementiertes Verfahren nach einem der Ansprüche 1 bis 3, wobei das Berechnen von 1D-SAXS-Stärkeprofilen, die variierenden Parametern mindestens eines Strukturmodells einer Probe in einem Medium entsprechen, für ein einzelnes Strukturmodell durchgeführt wird und wobei das erste SAXS-Messungsdatenanalysemodell ein Regressionsmodell ist, das zum Vorhersagen eines Werts von mindestens einem der variierenden Parameter basierend auf experimentellen SAXS-Messungsdaten trainiert wird.

6. Computerimplementiertes Verfahren nach einem der Ansprüche 1 bis 5, wobei das Erzeugen der Trainingsdatenmenge ferner die Schritte des Normalisierens, Umwandelns in eine logarithmische Skala und Standardisierens der bestimmten experimentellen SAXS-Stärkeprofile umfasst.

7. Computerimplementiertes Verfahren nach einem der Ansprüche 1 bis 6, wobei die erste Menge von experimentellen SAXS-Messungseinstellungen ferner eine Detektorpixelgröße und einen Proben-Detektor-Abstand umfasst.

8. Computerimplementiertes Verfahren nach einem der Ansprüche 1 bis 7, wobei die erste Menge von experimentellen SAXS-Messungseinstellungen ferner eine Messzeit umfasst.

9. Computerimplementiertes Verfahren nach einem der Ansprüche 1 bis 8, ferner umfassend das Bestimmen eines zweiten experimentellen 1D-SAXS-Stärkeprofils für jedes einzelne der berechneten SAXS-Stärkeprofile basierend auf einer zweiten Menge von experimentellen SAXS-Messeinstellungen, die ein zweites Röntgenstrahl-Stärkeprofil an dem 2D-Detektor umfasst, und wobei die ersten experimentellen 1D-SAXS-Stärkeprofile zum Durchführen von maschinellem Lernen des ersten SAXS-Messungsdatenanalysemodells verwendet werden und die zweiten experimentellen 1D-SAXS-Stärkeprofile zum Durchführen von maschinellem Lernen eines zweiten SAXS-Messungsdatenanalysemodells verwendet werden, das mit der zweiten Menge von experimentellen SAXS-Messungseinrichtungseinstellungen verknüpft ist.

10. Verfahren zur SAXS-Messungsdatenanalyse, das die folgenden Schritte umfasst:
- Erhalten von SAXS-Daten, die experimenteller Messung entsprechen, die von einem SAXS-Instrument vorgenommen wird; und
- Verarbeiten der erhaltenen SAXS-Daten unter Verwendung des durch das Verfahren nach Anspruch 1 gelernten ersten SAXS-Messungsdatenanalysemodells.

11. Verfahren zur SAXS-Messungsdatenanalyse, das die folgenden Schritte umfasst:
- Erhalten (F1) von SAXS-Daten, die experimenteller Messung entsprechen, die von einem SAXS-Instrument vorgenommen wird;
- Verarbeiten (F2) der erhaltenen SAXS-Daten unter Verwendung des durch das Verfahren nach Anspruch 4 trainierten Strukturmodellklassifikators;
- Auswählen des Strukturmodells, das die höchste Vereinbarkeit mit den experimentellen SAXS-Messungsdaten aufweist; und
- Verarbeiten (F3) der erhaltenen SAXS-Daten unter Verwendung des durch das Verfahren nach Anspruch 5 gelernten Regressionsmodells mit dem ausgewählten Strukturmodell als das einzelne Strukturmodell, um einen Wert von mindestens einem der variierenden Parameter zu bestimmen.

12. Computerimplementiertes Verfahren nach Anspruch 11, das ferner das Bestimmen (F4) von Parametern eines Probenmodells durch Anpassen der erhaltenen SAXS-Daten an das Probenmodell umfasst, wobei das Bestimmen basierend auf dem bestimmten Wert und dem ausgewählten Strukturmodell eingeleitet wird.

13. Verfahren zur SAXS-Messungsdatenanalyse, das die folgenden Schritte umfasst:
- Erhalten von SAXS-Daten, die experimenteller Messung entsprechen, die von einem SAXS-Instrument vorgenommen wurde, das gegebene experimentelle Einstellungen aufweist;
- basierend auf den gegebenen experimentellen Einstellungen, Auswählen des durch das Verfahren nach Anspruch 10 gelernten ersten oder zweiten SAXS-Messungsdatenanalysemodells; und
- Verarbeiten der erhaltenen SAXS-Daten mit der ausgewählten einen von der ersten oder der zweiten SAXS-Messungsdatenanalyse.

14. Verfahren zur SAXS-Messungsdatenanalyse, das die folgenden Schritte umfasst:
- Erhalten (G1) von SAXS-Daten, die experimenteller Messung entsprechen, die durch ein SAXS-Instrument vorgenommen wird, das experimentelle Einstellungen aufweist;
- Implementieren (G5) des Verfahrens nach Anspruch 1 zum Durchführen von maschinellem Lernen des ersten SAXS-Messungsdatenanalysemodells unter Verwendung der experimentellen Einstellungen als die Einstellungen der ersten Menge von experimentellen SAXS-Messungseinstellungen; und
- Verarbeiten (G6) der erhaltenen SAXS-Daten mit dem gelernten ersten SAXS-Messungsdatenanalysemodell.

15. Datenverarbeitungseinheit, die einen Prozessor umfasst, der dazu ausgestaltet ist, das Verfahren nach einem der Ansprüche 1 bis 14 durchzuführen.

16. Instrument zur Small Angle X-ray-Scattering (Kleinwinkel-Röntgenstreuung), das eine Datenverarbeitungseinheit nach Anspruch 15 umfasst.

17. Computerprogrammprodukt, das Anweisungen umfasst, die, wenn das Programm von einem Computer ausgeführt wird, bewirken, dass der Computer das Verfahren nach einem der Ansprüche 1 bis 14 durchführt.

## Revendications

1. Méthode mise en oeuvre par ordinateur pour générer (E1, E2) un ensemble de données d'entraînement (41, 42) et pour utiliser (E3, E31, E32) l'ensemble de données d'entraînement afin d'effectuer l'apprentissage automatique d'un premier modèle (DAM) d'analyse de données de mesure de diffusion des rayons X aux petits angles, SAXS, dans lequel la génération de l'ensemble de données d'entraînement comprend l'étape de :
- Calcul (E1) de profils d'intensité SAXS 1D correspondant chacun à des paramètres variables d'au moins un modèle structurel d'un échantillon dans un milieu ; et
- sur la base d'un premier ensemble de paramètres expérimentaux de mesure SAXS comprenant un premier profil d'intensité du faisceau de rayons X au niveau d'un détecteur 2D, estimation (E2) d'un premier profil d'intensité SAXS 1D expérimental à partir de chacun des profils d'intensité SAXS 1D calculés,
dans laquelle ladite estimation consiste à étaler chacun des profils d'intensité SAXS 1D calculés par convolution avec une fonction d'étalement du point associée au premier profil d'intensité du faisceau de rayons X.

2. La méthode mise en oeuvre par ordinateur de la revendication 1, dans laquelle le premier ensemble de paramètres expérimentaux de mesure SAXS comprend en outre des paramètres de rapport signal/bruit qui incluent une taille du détecteur 2D et une position du faisceau sur le détecteur 2D, et dans laquelle ladite estimation comprend en outre l'ajout d'un bruit à chacun des profils d'intensité SAXS 1D calculés sur la base des paramètres de rapport signal/bruit.

3. La méthode mise en oeuvre par ordinateur selon l'une des revendications 1 et 2, comprenant en outre la détermination, sur la base du premier ensemble de paramètres expérimentaux de mesure SAXS et d'un profil d'intensité SAXS 1D théorique d'une solution vierge, d'un profil d'intensité SAXS 1D expérimental de la solution vierge et la soustraction du profil d'intensité SAXS 1D expérimental de la solution vierge de chacun des profils d'intensité SAXS 1D expérimentaux.

4. La méthode mise en oeuvre par ordinateur selon l'une des revendications 1 à 3, dans laquelle le calcul des profils d'intensité SAXS 1D correspondant à des paramètres variables d'au moins un modèle structurel d'un échantillon dans un milieu est effectué pour une pluralité de modèles structurels et dans laquelle le premier modèle d'analyse des données de mesure SAXS est un classificateur de modèle structurel entraîné à prédire la compatibilité des données expérimentales de mesure SAXS avec chaque modèle structurel de la pluralité de modèles structurels.

5. La méthode mise en oeuvre par ordinateur selon l'une des revendications 1 à 3, dans laquelle le calcul des profils d'intensité SAXS 1D correspondant à des paramètres variables d'au moins un modèle structurel d'un échantillon dans un milieu est réalisé pour un modèle structurel unique et dans lequel le premier modèle d'analyse des données de mesure SAXS est un modèle de régression entraîné à prédire une valeur d'au moins un des paramètres variables sur la base des données de mesure SAXS expérimentales.

6. La méthode mise en oeuvre par ordinateur selon l'une des revendications 1 à 5, dans laquelle la génération de l'ensemble de données d'apprentissage comprend en outre les étapes de normalisation, de transformation en échelle logarithmique et de standardisation des profils d'intensité SAXS expérimentaux déterminés.

7. La méthode mise en oeuvre par ordinateur selon l'une des revendications 1 à 6, dans laquelle le premier ensemble de paramètres expérimentaux de mesure SAXS comprend en outre une taille de pixel du détecteur et une distance échantillon à détecteur.

8. La méthode mise en oeuvre par ordinateur selon l'une des revendications 1 à 7, dans laquelle le premier ensemble de paramètres expérimentaux de mesure SAXS comprend en outre un temps de mesure.

9. La méthode mise en oeuvre par ordinateur de l'une des revendications 1 à 8, comprenant la détermination d'un second profil d'intensité SAXS expérimental 1D pour chacun des profils d'intensité SAXS calculés sur la base d'un second ensemble de paramètres expérimentaux de mesure SAXS qui comprend un second profil d'intensité de faisceau de rayons X au niveau du détecteur 2D et dans lequel les premiers profils d'intensité SAXS 1D expérimentaux sont utilisés pour l'apprentissage automatique du premier modèle d'analyse des données de mesure SAXS et les seconds profils d'intensité SAXS 1D expérimentaux sont utilisés pour l'apprentissage automatique d'un second modèle d'analyse des données de mesure SAXS associé au deuxième de paramètres expérimentaux de mesure SAXS.

10. Méthode d'analyse des données de mesure SAXS, comprenant les étapes suivantes :
- obtenir des données SAXS correspondant à des mesures expérimentales effectuées par un instrument SAXS ; et
- traiter les données SAXS obtenues à l'aide du premier modèle d'analyse des données de mesure SAXS appris par le procédé de la revendication 1.

11. Méthode d'analyse des données de mesure SAXS, comprenant les étapes suivantes :
- l'obtention (F1) de données SAXS correspondant à des mesures expérimentales effectuées par un instrument SAXS ;
- le traitement (F2) des données SAXS obtenues à l'aide du classificateur de modèle structurel entraîné par la méthode de la revendication 4 ;
- sélectionner le modèle structurel ayant la plus grande compatibilité avec les données expérimentales de mesure SAXS ; et
- traiter (F3) les données SAXS obtenues en utilisant le modèle de régression appris par la méthode de la revendication 5 avec le modèle structurel sélectionné comme modèle structurel unique, pour déterminer une valeur d'au moins un des paramètres variables.

12. La méthode mise en oeuvre par ordinateur de la revendication 11, comprenant en outre la détermination (F4) des paramètres d'un modèle d'échantillon en ajustant les données SAXS obtenues au modèle d'échantillon, ladite détermination étant initiée sur la base de la valeur déterminée et du modèle structure sélectionné.

13. Méthode d'analyse des données de mesure SAXS, comprenant les étapes suivantes :
- l'obtention de données SAXS correspondant à des mesures expérimentales effectuées par un instrument SAXS ayant des paramètres expérimentaux donnés ;
- sur la base des paramètres expérimentaux donnés, sélection du premier ou du second modèle d'analyse des données de mesure SAXS appris par le procédé de la revendication 10 ; et
- traiter les données SAXS obtenues à l'aide du modèle sélectionné parmi le premier et le second modèles d'analyse de données de mesure SAXS.

14. Méthode d'analyse des données de mesure SAXS, comprenant les étapes suivantes :
- obtenir (G1) des données SAXS correspondant à des mesures expérimentales effectuées par un instrument SAXS ayant des paramètres expérimentaux ;
- mettre en oeuvre (G5) la méthode de la revendication 1 pour effectuer un apprentissage automatique du premier modèle d'analyse des données de mesure SAXS en utilisant les paramètres expérimentaux en tant que paramètres du premier ensemble de paramètres expérimentaux de mesure SAXS ; et
- traitement (G6) des données SAXS obtenues avec le premier modèle d'analyse des données de mesure SAXS appris.

15. Unité de traitement de données comprenant un processeur configuré pour exécuter la méthode de l'une des revendications 1 à 14.

16. Instrument de diffusion des rayons X aux petits angles comprenant une unité de traitement des données selon la revendication 15.

17. Produit de programme informatique comprenant des instructions qui, lorsque le programme est exécuté par un ordinateur, font en sorte que l'ordinateur exécute la méthode de l'une des revendications 1 à 14.
